(19) Europäisches Patentamt

European Patent Office

Office européen des brevets

(11) **EP 0 963 816 B1**

(12) **EUROPÄISCHE PATENTSCHRIFT**

(45) Veröffentlichungstag und Bekanntmachung des Hinweises auf die Patenterteilung:
**08.03.2006  Patentblatt 2006/10**

(51) Int Cl.:
***B25J 9/16*** (2006.01)

(21) Anmeldenummer: **99111019.8**

(22) Anmeldetag: **11.06.1999**

(54) **Verfahren zum Erfassen und Kompensieren von kinematischen Veränderungen eines Roboters**

Method for measuring and compensating kinematic modifications of a robot

Méthode de mesure et de compensation des altérations cinématiques d'un robot

(84) Benannte Vertragsstaaten:
**AT BE DE ES FI FR GB IT NL PT SE**

(30) Priorität: **12.06.1998  DE 19826395**

(43) Veröffentlichungstag der Anmeldung:
**15.12.1999  Patentblatt 1999/50**

(73) Patentinhaber: **AMATEC GmbH**
**82110 Germering (DE)**

(72) Erfinder:
- **Rawiel, Gerd**
  **86167 Augsburg (DE)**
- **Wiest, Ulrich**
  **86152 Augsburg (DE)**
- **Verl, Alexander**
  **82205 Gilching (DE)**
- **Pieters, Stefan**
  **82206 Gilching (DE)**

(74) Vertreter: **Reinhard - Skuhra - Weise & Partner**
**Postfach 44 01 51**
**80750 München (DE)**

(56) Entgegenhaltungen:
**EP-A- 0 329 531        EP-A- 0 605 050**
**DE-A- 19 616 276       US-A- 4 725 965**
**US-A- 4 753 569**

- **PREISING B ET AL: "Robot performance measurement and calibration using a 3D computer vision system" PROCEEDINGS OF THE INTERNATIONAL CONFERENCE ON ROBOTICS AND AUTOMATION SACRAMENTO, APR. 9 - 11, 1991, LOS ALAMITOS, IEEE COMP. SOC. PRESS, US, Bd. 2 CONF. 7, 9. April 1991 (1991-04-09), Seiten 2079-2084, XP010024057 ISBN: 0-8186-2163-X**

EP 0 963 816 B1

**Beschreibung**

Die vorliegende Erfindung betrifft ein Verfahren gemäß dem Oberbegriff des Patentanspruchs 1, wie aus dem Dokument EP-A-0 329 531 bekannt.

Das Dokument EP-A-0 605 050 offenbart ein Verfahren zum Steuern eines Roboters mittels eines adaptiven kinematischen Modells, wobei Parameter in Abhängigkeit von einer externen Erfassung der Position des Roboters angepasst werden.

Das Dokument XP 010024057 offenbart eine Kalibration eines Roboters mittels einer dreidimensionalen optischen Erfassungsvorrichtung, welche die Positionenorientierung von 36 schwarzen Scheiben auf einer Platte an dem Roboter erfasst.

Solche kinematischen Veränderungen beeinflussen insbesondere die Positionierbarkeit des Roboters und rühren von internen Einflußfaktoren, wie z.B. Alterung, Verschleiß, Derformation, ..., und externen Faktoren, wie z.B. Temperatur, Druck, Lastwechsel, ..., her.

Obwohl auf beliebige Roboter anwendbar, werden die vorliegende Erfindung sowie die ihr zugrundeliegende Problematik in bezug auf einen Industrieroboter zur Vermessung von Fahrzeug-Karosserieteilen erläutert.

Allgemein kommen für die Vermessung von Bauteilen, insbesondere Fahrzeug-Karosserieteilen in der Automobilindustrie, zunehmend Industrieroboter zum Einsatz. Diese Roboter sind mit einem beispielsweise optischen Meßsystem ausgestattet und können sehr flexibel für komplizierte Meßaufgaben, insbesondere an schwer zugänglichen Stellen eingesetzt werden. Für eine gleichbleibend gute Qualität solcher Messungen ist es erforderlich, daß die kinematischen Veränderungen des Roboters keinen oder nur einen verschwindend geringen Einfluß auf die Messungen haben.

Der Idealzustand wäre, wenn sowohl innere Effekte, wie z.B. Abnutzungserscheinungen, als auch äußere Effekte, wie z.B. Temperaturschwankungen der Meßumgebung, kompensierbar wären.

Dies ist jedoch bei den heutzutage bekannten Systemen nicht möglich. Vielmehr ist man darauf angewiesen, die Abnutzungserscheinungen, Temperatureinflüsse usw. direkt zu erfassen und zu kompensieren. Beispielsweise sind somit eine häufige Nachjustage der Mechanik des Roboters und eine Klimatisierung der Meßumgebung notwendig. Diese Vorgehensweise ist zeit- und kostenaufwendig.

Die DE 196 16 276 A1 beschreibt ein Verfahren und eine Vorrichtung zum Vermessen und Kalibrieren eines mehrachsigen Industrieroboters mit einer Vermessungseinrichtung, welche aus einem Maßkörper und einer Meßvorrichtung besteht. Der Maßkörper und der Roboter haben einen gemeinsamen Bezugsort, an dem sie lösbar und austauschbar angeordnet sind. An diesem Bezugsort wird zunächst der Maßkörper vermessen, anschließend gegen den Roboter ausgetauscht und an der Roboterhand befestigt. Der Roboter wird in eine Grundposition mit angenommener Nullstellung seiner Achsen bewegt, dort vermessen und anschließend in eine vorgegebene Meßposition gefahren, in der der Maßkörper erneut vermessen wird. Anschließend werden die Istlage des Maßkörpers in der Meßposition und seine Sollage verglichen, wobei aus den Lageabweichungen die Stellungsdifferenzen zwischen angenommener und tatsächlicher Nullstellung des Roboters ermittelt werden. Unter Berücksichtigung der Stellungsdifferenzen wird dann der Roboter in die tatsächliche Nullstellung gefahren und mit seinen Achsen dort kalibriert.

Bei diesem bekannten Verfahren wird jedoch nur einmalig die die tatsächliche Nullstellung ermittelt, ohne daß die Einflüsse von kinematischen Veränderungen des betreffenden Roboters oder seiner Umgebung auf die zugehörige Robotersteuerung berücksichtigt werden.

Eine Aufgabe der vorliegenden Erfindung besteht darin, ein robustes und störmanfälliges Verfahren zur Kompensation der Einflüsse von kinematischen Veränderungen eines Roboters oder seiner Umgebung auf eine zugehörige Robotersteuerung zu schaffen, welches solche ungewünschten Einflüsse erfaßen und kompensieren kann, wobei eine hohe Flexibilität bei der Aufstellung und Einrichtung des Roboters gewahrt bleibt.

Erfindungsgemäß wird diese Aufgabe durch das in Anspruch 1 angegebene Verfahren gelöst.

Das erfindungsgemäße Verfahren weist gegenüber den bekannten Lösungsansätzen den Vorteil auf, daß es eine robuste Methode zur Erfassung und Kompensation von kinematischen Veränderungen liefert, die unabhängig von den Ursachen der Veränderungen arbeitet. Durch das beschriebene Verfahren wird der Roboter in die Lage versetzt, während seiner gesamten Lebensdauer in seiner realen Arbeitsumgebung - in einem definierten Arbeitsraum - seine physisch vorgegebene Wiederholgenauigkeit zu bewahren. Auftretende Fehlereinflüsse werden durch das erfindungsgemäße Verfahren systematisch erfaßt und permanent kompensiert.

Damit ergeben sich überall dort neue Einsatzgebiete des Roboters, wo bisher aufgrund externer oder interner Einflüsse die erforderliche langzeitige Positioniergenauigkeit nicht erreicht werden konnte.

Die der vorliegenden Erfindung zugrundeliegende Idee besteht darin, daß der Roboter bzw. Posen des Roboters im gesamten Arbeitsraum vermessen werden. Die Posen werden abhängig von der Aufgabenstellung durch einen technischen Algorithmus optimiert beschrieben. Jeder oder bestimmten vorgegebenen Posen (Sollwert) wird beim Betrieb ein Istwert zugeordnet. Diese Pärchen von Soll/Istdaten dienen als Input für eine Prozedur zur Parameteranpassung bzw. - optimierung. Durch die Parameteroptimierung werden die kinematischen Veränderungen kompensiert.

Die Ergebnisse können dauerhaft oder temporär in der Robotersteuerung abgelegt werden, und bei Bedarf können die erforderlichen Anpassungen unternommen werden. So werden auftretende reale Abweichungen funktional kompensiert und das Positioniervermögen trotz sich ändernder Randbedingungen bzw. trotz zunehmendem Verschleiß erhalten.

Die Erfassung der Abweichungen und deren Kompensation im Betrieb heißt entweder im Realbetrieb oder im Simulationsbetrieb oder bei beiden.

In den Unteransprüchen finden sich vorteilhafte Weiterbildungen und Verbesserungen des in Anspruch 1 angegebenen Verfahrens.

Erfindungsgemäß erfolgt das Anpassen des oder der Parameter des Robotermodells zur Kompensation der kinematischen Veränderungen unter Berücksichtigung der erfaßten Abweichung, wenn die erfaßte Abweichung einen vorbestimmten Wert überschreitet. Dies ist jedoch nicht die einzige Möglichkeit, vielmehr können z.B. auch Trends verfolgt werden und erst nach mehreren Überschreitungen Anpassungen eingeleitet werden.

Erfindungsgemäß erfolgt das Bereitstellen eines Robotermodells in Form eines technischen Algorithmus mit einem oder mehreren festgelegten Parametern durch Anbringen eines Maßkörpers an der Roboterhand; Erfassen der tatsächlichen räumlichen Iststellung des Maßkörpers durch die Sensoreinrichtung an einer Vielzahl von durch den einen oder die mehreren Steuergrößen bestimmten Referenzpunkten und durch Festlegen des oder der Parameter derart, daß das Robotermodell die räumliche Stellung des Roboters an den Referenzpunkten in Abhängigkeit von der oder den Steuergrößen mit einer bestimmten Genauigkeit beschreibt.

Erfindungsgemäß wird als Sensoreinrichtung mindestens eine Kamera verwendet, welche extern aufgestellt ist.

Gemäß einer weiteren bevorzugten Weiterbildung wird das Erfassen der kinematischen Veränderungen anhand der Abweichung der erfaßten tatsächlichen räumlichen Iststellung des Roboters von der theoretischen räumlichen Sollstellung des Roboters an den Referenzpunkten durchgeführt, indem ein jeweiliger Korrekturvektoren zwischen der erfaßten tatsächlichen räumlichen Iststellung des Roboters und dem entsprechenden Referenzpunkt eingeführt wird.

Erfindungsgemäß wird die tatsächlichen räumliche Iststellung des Roboters im Betrieb durch die Sensoreinrichtung mittels eines am Roboter angebrachten Maßkörpers ermittelt. Durch die Maßkörpervermessung werden die Basis und das Tool unabhängig von der eigenen Kinematik des Roboters geschätzt, und somit gehen auch seine Fehler nicht in die Schätzung ein.

Gemäß einer weiteren bevorzugten Weiterbildung wird die Güte der im Betrieb durch die Sensoreinrichtung erfaßten tatsächlichen räumlichen Iststellung des Roboters ermittelt wird und das Anpassen davon abhängig gemacht. Somit gehen als Import für die Parameteranpassung nur gültige bzw. zuverlässig ermittelte Daten ein, und Ausreißer sind eliminierbar.

Erfindungsgemäß erfolgt das Ermitteln der Güte durch Bereitstellen eines Maßkörpers mit Markern am Roboter; Festlegen eines inneren Koordinatensystems auf dem Maßkörper und der entsprechenden Koordinaten der Marker; Erfassen der Koordinaten der Marker im Weltkoordinatensystem durch die Sensoreinrichtung; optimiertes Abbilden der Koordinaten der Marker im inneren Koordinatensystems auf die Koordinaten der Marker im Weltkoordinatensystem und durch Ermitteln der Güte anhand des mittleren Fehlers der Abbildung. Diese Vorgehensweise liefert eine qualitative Aussage über die Güte der Meßdaten.

Ausführungsbeispiele der Erfindung sind in den Zeichnungen dargestellt und in der nachfolgenden Beschreibung näher erläutert.

Es zeigen:

Fig. 1    eine schematische Darstellung eines Robotersystemaufbaus zur Erläuterung einer ersten Ausführungsform des erfindungsgemäßen Verfahrens;

Fig. 2    eine schematische Darstellung eines Robotersystemaufbaus zur Erläuterung einer zweiten Ausführungsform des erfindungsgemäßen Verfahrens; und

Fig. 3    eine Darstellung der Häufigkeit von Meßabweichungen beim üblichen Verfahren im Vergleich zur zweiten Ausführungsform des erfindungsgemäßen Verfahrens.

In den Figuren bezeichnen gleiche Bezugszeichen gleiche oder funktionsgleiche Komponenten.

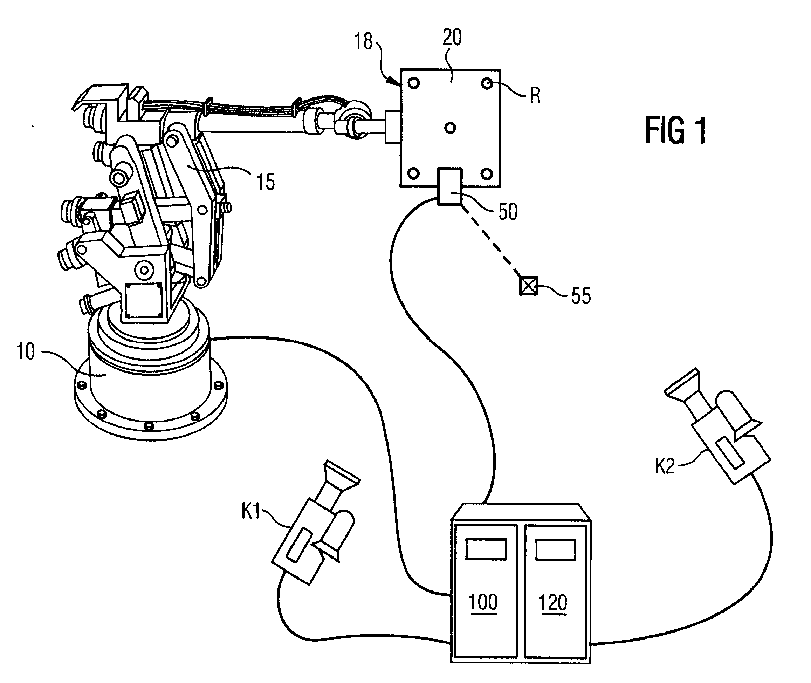

Fig. 1 zeigt eine schematische Darstellung eines Robotersystemaufbaus zur Erläuterung einer ersten Ausführungsform des erfindungsgemäßen Verfahrens.

In Fig. 1 bezeichnet Bezugszeichen 10 einen an seinem Einsatzort fest montierten Roboter, 15 einen Roboterarm, 18 eine (verdeckte) Roboterhand, 20 einen Maßkörper, R Referenzpunkte auf dem Maßkörper 20, 50 einen Lageermittlungssensor, welcher mit dem Meßpunkt 55 zusammenwirkt, $K_1$ und $K_2$ eine erste bzw. zweite externe Kamera, welche den Maßkörper in ihrem gemeinsamen Sichtbereich haben, 100 eine Robotersteuerung und 120 einen Hostrechner. Die Roboterhand 18 ist zusätzlich mit einem (nicht gezeige) Werkzeug, z.B. einem Meßvideosensor, bestückt.

Mit diesem Systemaufbau ist man prinzipiell in der Lage, eineseits mit dem Roboter 10 Messungen vorzunehmen und andererseits die Position und Orientierung des Maßkörpers 20 zu bestimmen.

In Form eine Steuerprogramms existiert in der Robotersteuerung ein Robotermodell in Form eines technischen bzw. physikalisch/mathematischen Algorithmus mit einem oder mehreren festgelegten Parametern, welches die theoretische räumliche Stellung des Roboters 10 in Abhängigkeit von einer oder mehreren Steuergrößen beschreibt. Als Parameter kommen beispielsweise Linklängen, Achsenschiefstände, Nullpunktfehler, Gelenklose, Gelenkelastizitäten usw. in Frage.

Mittels dieses Modells und einer entsprechend modifizierten Kinematik ist der Roboter 10 in der Lage, kartesische Positionen in seinem Arbeitsraum mit hoher Genauigkeit zu erreichen.

Im folgenden wird näher erläutert, wie der oder die Parameter für das Robotermodell festgelegt werden. Zum Zeitpunkt der Inbetriebnahme befindet sich der Roboter 10 in einer bestimmten kinematischen Konfiguration, die von den besagten internen und externen Einflußfaktoren abhängig ist. Diese Referenzkonfiguration wird über eine Referenzmessung festgehalten, indem der Maßkörper 20 an ausreichend vielen räumlichen Roboterstellungen (entsprechend Referenzpunkten $a_i$ mit i = 1 ... n), welche durch die Steuergrößen bestimmt werden, durch die eine erste und zweite externe Kamera $K_1$ bzw. $K_2$ vermessen wird. Darauf erfolgt das Festlegen des oder der Parameter derart, daß das Robotermodell die räumliche Stellung des Roboters 10 an den Referenzpunkten in Abhängigkeit von der oder den Steuergrößen mit einer bestimmten sehr hohen Genauigkeit beschreibt. Hoch bedeutet dabei, daß die Genauigkeit größer ist als die aufgrund der kinematischen Veränderungen auftretenden Schwankungen.

Ändert sich nun die Referenzkonfiguration, d.h. treten kinematische Veränderungen des Systems auf, werden die Referenzpunkte $a_i$ nicht mehr mit der sehr hohen Genauigkeit anfahrbar sein, welche durch die Referenzmessungsparameter bestimmt ist, sondern es werden sich Abweichungen zwischen Soll- und Istwerten ergeben, welche mittels der beiden Kameras $K_1$, $K_2$ erfaßt werden.

Aufgrund der jeweiligen Abweichung zwischen Sollwert $F_i$ und Istwert $F^*_i$ wird eine Anpassung des oder der Parameter des Robotermodells ausgelöst, nämlich bei dieser Ausführungsform, wenn die erfaßte Abweichung einen vorbestimmten Wert überschreitet.

Diese Anpassung geschieht dadurch, daß ein jeweiliger Korrekturvektor $T_i$ zwischen der erfaßten tatsächlichen räumlichen Iststellung $F^*_i$ des Roboters 10 und dem entsprechenden Referenzpunkt als Sollwert $F_i$ eingeführt wird. Es gilt dabei die funktionelle Beziehung:

$$T(M, a_i) \cdot T_i = F_i \qquad\qquad\qquad (1)$$

wobei die Korrekturvektoren $T_i$ den Fehler $T(M,a_i)^{-1} F_i$ zwischen dem theoretischen Sollwert $T(M,a_i)$ und der Referenzmessung $F_i$ beschreiben, wobei M das ursprüngliche Computermodell ist.

Der zentrale Teil der Anpassung besteht nun darin, daß ursprüngliche Robotermodell M mit dem oder den ursprünglichen Parametern in ein angepaßtes Robotermodell M* mit einem oder mehreren angepaßten Parametern umzuwandeln.

Diese Aufgabe führt auf ein nicht-lineares Minimierungsproblem der Form:

$$\sum_{i=1}^{n} \left| T(M^*, a_i) - F_i^* \cdot T^{-1} \right|^2 = \min. \qquad\qquad (2)$$

Die Lösung dieses Minimierungsproblems erfolgt zweckmäßigerweise mittels der Gauß-Newton-Methode.

Durch die Einführung der Korrekturvektoren gelingt es also, die Fehler zu quantisieren und zu kompensieren, welche auf kinematischen Änderungen der Referenzkonfiguration beruhen. Dabei werden nicht die Einflußfaktoren, sondern deren Wirkung erfaßt. Letztere sind also unerheblich, da der Roboter 10 lediglich auf sein ursprüngliches Verhalten zurückgeführt wird.

Das Steuern der theoretischen räumlichen Sollstellung des Roboters mit der Robotersteuerung (100) gemäß dem Robotermodell mit dem oder den angepaßten Parametern erfolgt dann solange, bis die erfaßten Abweichungen eine erneute Anpassung erforderlich machen.

Gemäß einer Weiterbildung der ersten Ausführungsform wird nun eine robuste und reproduzierbare Prozedur angegeben, durch die die Position und die Orientierung eines Maßkörpers bzw. Meßwerkzeuges im kartesischen Raum hochgenau ermittelt werden kann. Die Prozedur benötigt neben den Meßwerten ein internes Koordinatensystem, in dem die Meßmerkmale a priori bestimmt wurden, als Eingangsgrößen. Im weiteren Verlauf der Prozedur entsteht eine Ko-

ordinatentransformation vom Weltkoordinatensystem zum Meßwerkzeugkoordinatensystem durch eine optimale Anpassung der erhaltenen Meßwerte.

Über die bekannten Abstände der Meßmerkmale untereinander wird die Güte der Meßdaten laufend eindeutig kontrolliert, also nicht nur nach ihrer Plausibilität, sondern genau quantisierbar. Somit können Ausreißer der Meßdaten, konkret der gemessenen Istwerte der räumlichen Position des Roboters 10, eliminiert werden und verhindert werden, daß die irrtümlicherweise eine Anpassung des oder der Modellparameter auslösen.

Im einzelnen besteht der Maßkörper aus einer stabilen Vorrichtung zum Anbringen von Meßmerkmalen (sog. Marker). Hierbei sind verschiedene Variationen von einer Metallplatte bis hin zu einzelnen Verstrebungen vorstellbar. Wichtig ist allein die geometrische Invarianz, also Stabilität gegenüber Verformungen.

Das interne Koordinatensystem bzw. Meßwerkzeugkoordinatensystem des Maßkörpers entsteht aus einer Messung der Meßmerkmale, die darauf in ausreichend großen Abständen angebracht sind. Diese Messung erfolgt unter optimalen Bedingungen und liefert alle Markerpositionen im internen Koordinatensystem mit willkürlich definiertem Ursprung.

Eine Schätzung liefert die Position und Orientierung des Maßkörpers, der am Roboter 10 angebracht ist, bezüglich des Weltkoordinatensystems, wie z.B. erfaßt durch die externen Kameras $K_1$ und $K_2$. Die extern erfaßten Meßwerte $y_i$ bilden mit den entsprechenden bekannten Koordinaten $x_i$ des internen Koordinatensystems die Eingangsdaten für diese Schätzung. Man sucht nun eine Abbildung A bestehend aus einem Translationsanteil (a,b,c) und einem Rotationsanteil $(\alpha,\beta,\gamma)$, welche jedes Urbild $x_i$ auf den entsprechenden Meßwert $y_i$ abbildet. Dieser Ansatz läßt sich mit der Methode der kleinsten Fehlerquadrate lösen, nämlich gemäß der Beziehung:

$$\sum_{i=1}^{n} |A(a,b,c;\alpha,\beta,\gamma)x_i - y_i|^2 = \min. \qquad (3)$$

Der mittlere Fehler der Abbildung liefert dann ein Maß für die gesuchte Güte.

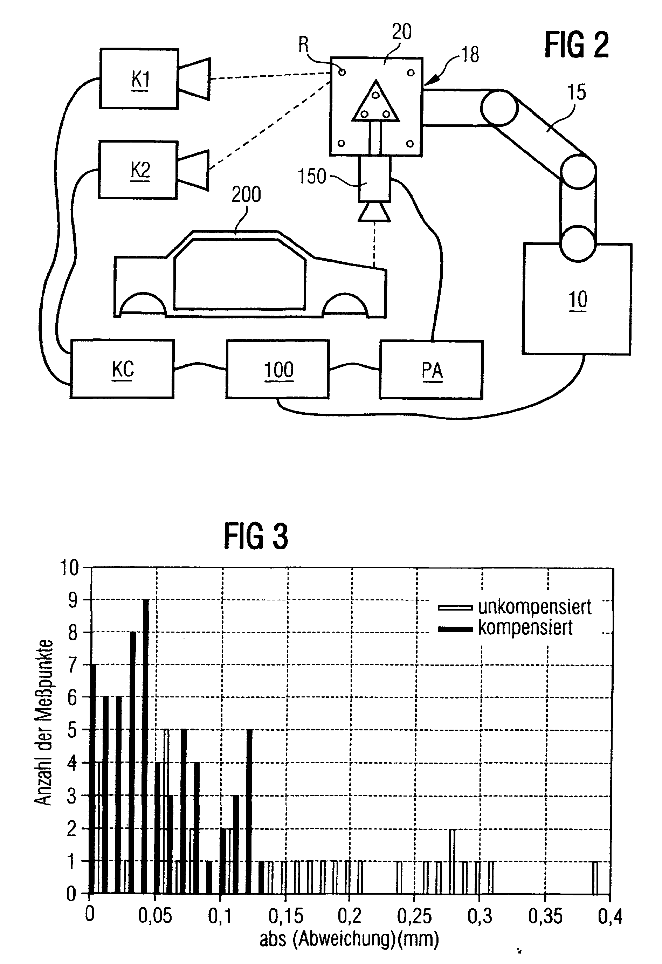

Fig. 2 zeigt eine schematische Darstellung eines Robotersystemaufbaus zur Erläuterung einer zweiten Ausführungsform des erfindungsgemäßen Verfahrens.

In Fig. 2 bezeichnen zusätzlich zu den bereits eingeführten Bezugszeichen KC eine Kamerasteuerungs-/-auswertungeinrichtung, 150 einen Meßvideosensor, 200 ein Meßobjekt in Form einer Fahrzeugkarosserie und PA eine Meßvideosensorsteuerungs-/-auswertungeinrichtung.

Der in Fig. 2 gezeigte Systemaufbau dient zur genauen Vermessung der Fahrzeugkarosserie 200 mit dem Meßvideosensor 150 unter Manipulation durch den Roboter 10.

Zunächst wurde ein Robotermodell mit mehreren festgelegten Parametern, welches die theoretische räumliche Stellung des Roboters 10 in Abhängigkeit von einer oder mehreren Steuergrößen beschreibt, vorgegeben. Es erfolgte dann ein Steuern der theoretischen räumlichen Sollstellung des Roboters mit der Robotersteuerung 100 gemäß diesem Robotermodell und dabei eine Vermessung der Fahrzeugkarosserie 200 mit dem Meßvideosensor 150.

Dann wurde das derart aufgebaute Meßsystem thermischen Streßfahrten mit einem Temperaturhub von 20 °C unterworfen.

Es folgte ein Erfassen der tatsächlichen räumlichen Iststellung des Roboters 10 im Simulationsbetrieb durch die Sensoreinrichtung in Form der Kameras $K_1$, $K_2$. Wie erwartet ergabt sich das Vorhandensein kinematischer Veränderungen als Folge der thermischen Streßfahrten. Es folgte eine erneute Vermessung der Fahrzeugkarosserie 200 mit dem Meßvideosensor 150 (unkompensierte Daten in Fig. 3).

Es folgte darauf Anpassen der Parameter des Robotermodells zum Kompensieren der kinematischen Veränderungen unter Berücksichtigung der erfaßten Abweichung und ein Steuern der theoretischen räumlichen Sollstellung des Roboters mit der Robotersteuerung gemäß dem Robotermodell mit dem oder den angepaßten Parametern und dabei eine erneute Vermessung der Fahrzeugkarosserie 200 mit dem Meßvideosensor 150 (kompensierte Daten in Fig. 3).

Fig. 3 zeigt eine Darstellung der Häufigkeit von Meßabweichungen beim üblichen Verfahren im Vergleich zur zweiten Ausführungsform des erfindungsgemäßen Verfahrens.

Wie deutlich aus Fig. 3 erkennbar, zeigen die unkompensierten Daten eine Abweichung von bis zu etwa 0,390 mm gegenüber der ersten Messung vor den thermischen Streßfahrten. Demgegenüber zeigen die kompensierten Daten lediglich eine Abweichung von bis zu etwa 0,125 mm gegenüber der ersten Messung vor den thermischen Streßfahrten. Die Kompensation schafft also eine Verbesserung um einen Faktor 3.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Insbesondere sind genannten Anwendungen nur beispielhaft und beliebig verallgemeinerbar. Auch ist die Positionserfassung nicht auf Kameras beschränkt. Der Maßkörper muß nicht ein selbständiger Körper sein, sondern kann in den Roboter integriert sein. Auch die genannten Algorithmen dienen nur Illustrationszwecken und können durch andere geeignete Optimierungsalgorithmen ersetzt werden.

**Patentansprüche**

1. Verfahren zum Erfassen und Kompensieren von kinematischen Veränderungen eines Roboters (10) aufgrund interner und / oder externer Einflüsse mit den Schritten:

Bereitstellen eines Robotermodells in Form eines technischen Algorithmus mit einem oder mehreren festgelegten Parametern, welches die theoretische räumliche Stellung des Roboters (10) in Abhängigkeit von einer oder mehreren Steuergrößen beschreibt;
Anbringen eines Maßkörpers (20) an der Roboterhand (18);
Steuern der theoretischen räumlichen Sollstellung des Roboters (10) mit einer Robotersteuerung (100) gemäß dem Robotermodell;
Vorgeben einer Mehrzahl von Referenzpunkten ($a_i$);
Erfassen der tatsächlichen räumlichen Iststellung des Roboters (10) im Betrieb durch Erfassen des Maßkörpers (20) mittels einer Sensoreinrichtung ($K_1$, $K_2$; 50) an den Referenzpunkten ($a_i$) ;
Erfassen der kinematischen Veränderungen anhand der Abweichung der erfassten tatsächlichen räumlichen Iststellung des Roboters (10) von der theoretischen räumlichen Sollstellung des Roboters (10) an den Referenzpunkten ($a_i$);
Anpassen des oder der Parameter des Robotermodells zum Kompensieren der kinematischen Veränderungen unter Berücksichtigung der erfassten Abweichung; und
Steuern der theoretischen räumlichen Sollstellung des Roboters mit der Robotersteuerung (100) gemäß dem Robotermodell mit dem oder den angepassten Parametern,
**dadurch gekennzeichnet, dass**
die Referenzpunkte ($a_i$) durch die eine oder die mehreren Steuergrößen bestimmt werden;
die Sensoreinrichtung (K1, K2; 50) mindestens eine Kamera (K1, K2) aufweist, welche extern aufgestellt ist;
ein Festlegen eines inneren Koordinatensystems auf dem Maßkörper (20) und entsprechender Koordinaten einer Mehrzahl von Markern (R), welche an dem Maßkörper (20) vorgesehen sind, in dem inneren Koordinatensystem erfolgt;
ein Erfassen der Koordinaten der Marker (R) im Weltkoordinatensystem durch die Sensoreinrichtung ($K_1$, $K_2$; 50) erfolgt;
ein Abbilden der Koordinaten der Marker (R) im inneren Koordinatensystem auf die erfassten Koordinaten der Marker (R) im Weltkoordinatensystem an jedem Referenzpunkt ($a_i$) erfolgt; und
ein Ermitteln der Güte erfasster räumlicher Iststellungen an jedem Referenzpunkt ($a_i$) anhand des mittleren Fehlers der Abbildung erfolgt.

2. Verfahren nach Anspruch 1, **dadurch gekennzeichnet, dass** das Anpassen des oder der Parameter des Robotermodells zur Kompensation der kinematischen Veränderungen unter Berücksichtigung der erfassten Abweichung erfolgt, wenn die erfasste Abweichung einen vorbestimmten Wert überschreitet, und das Anpassen in Abhängigkeit der ermittelten Güte erfolgt.

3. Verfahren nach Anspruch 2, **dadurch gekennzeichnet, dass** Ausreißer der erfassten räumlichen Iststellungen eliminiert werden, um zu verhindern, dass anhand der Ausreißer eine Anpassung der Parameter erfolgt.

**Claims**

1. A method for detecting and compensating cinematic variations of a robot (10) caused by internal and / or external influences, comprising the steps of:

providing a model of a robot in form of a technical algorithm having one or more predetermined parameters, which describes the theoretical spatial position of the robot (10) depending on one or more control factors;
attaching a reference body (20) to a hand of the robot (18);
controlling the theoretical spatial set - position of the robot (10) with a robot control (100) according to the model of the robot;

predetermining a plurality of reference points ($a_i$);

detecting the real spatial actual position of the robot (10) during operation by means of detecting the reference body (20) using a sensor means ($K_1$, $K_2$; 50) at the reference points ($a_i$) ;

detecting the cinematic variations by means of the deviation of the detected real spatial actual position of the robot (10) from the theoretical spatial set-position of the robot (10) at the reference points ($a_i$);

fitting of the parameter(s) of the robot model for compensating the cinematic variation considering the detected deviation; and

controlling the theoretical spatial set-position of the robot with the robot control (100) in accordance with the robot model using the adapted parameter(s),

**characterised in that**

the reference points ($a_i$) are determined by one ore more control quantities;

the sensor means ($K_1$, $K_2$; 50) comprises at least one camera ($K_1$, $K_2$), which is arranged externally;

determining of an inner coordinate system on the reference body (20) and determining of respective coordinates of a plurality of markers (R), which are provided at the reference body (20), in the inner coordinate system are effected;

detecting of the coordinates of said markers (R) is effected in the world coordinate system by means of the sensor means ($K_1$, $K_2$; 50);

mapping of coordinates of said markers (R) in the inner coordinate system onto the detected coordinates of the markers (R) in the world coordinate system is effected at each reference point ($a_i$); and

detecting of the quality of detected spatial actual positions is effected at each reference point ($a_i$) by means of the mean error of the mapping.

2. The method according to claim 1, **characterised in that** the adaption of the parameter(s) of the model of the robot for compensating said cinematic variations is effected considering the detected deviations, when the detected deviation exceeds a predetermined value, and said adapting is effected depending on the determined quality.

3. The method according claim 2, **characterised in that** mavericks of the detected spatial actual positions are eliminated in order to prevent that an adaption of the parameters is effected on the basis of these mavericks.

## Revendications

1. Procédé pour la détection et la compensation de changements cinématiques d'un robot (10) dus à des influences internes et/ou externes avec les étapes :

Mise à disposition d'un modèle de robot sous la forme d'un algorithme technique avec un ou plusieurs paramètres déterminés, le modèle décrivant la position spatiale théorique du robot (10) en fonction d'une ou de plusieurs grandeurs de commande ;

Fixation d'un corps de calibrage (20) à la main du robot (18) ;

Commande de la position spatiale théorique du robot (10) avec une commande de robot (100) selon le modèle de robot ;

Fixation de plusieurs points de référence ($a_i$) ;

Détection de la position spatiale réelle du robot (10) en fonctionnement par la détection du corps de calibrage (20) aux points de référence ($a_i$) à l'aide d'un dispositif de détection (K1, K2 ; 50) ;

Détection des changements cinématiques à l'aide de la différence entre la position spatiale réelle du robot (10) détectée et la position spatiale théorique du robot (10) aux points de référence ($a_i$) ;

Adaptation du ou des paramètres du modèle de robot pour la compensation des changements cinématiques en prenant en compte la différence détectée ; et

Commande de la position spatiale théorique du robot avec la commande de robot (100) selon le modèle de robot avec le ou les paramètres adaptés,

**caractérisé en ce que**

les points de référence ($a_i$) sont déterminés par la ou les grandeurs de commande ;

le dispositif de détection (K1, K2 ;50) comprend au moins une caméra (K1, K2) placée de façon externe ;

une détermination d'un système de coordonnées interne sur le corps de calibrage (20) a lieu ainsi qu'une détermination de coordonnées correspondantes d'une multitude de marqueurs (R), prévus sur le corps de calibrage (20), dans le système de coordonnées interne ;

une détection des coordonnées des marqueurs (R) dans le système de coordonnées universelles est réalisée par le dispositif de détection ($K_1$, $K_2$ ; 50) ;

une représentation des coordonnées des marqueurs (R) dans le système de coordonnées interne sur les coordonnées détectées des marqueurs (R) dans le système de coordonnées universelles à chaque points de référence ($a_i$) est réalisée ; et

une détermination de la qualité des positions spatiales réelles détectées à chaque points de référence ($a_i$) est réalisée à l'aide de l'erreur moyenne de la représentation.

2. Procédé selon la revendication 1 **caractérisé en ce que** l'adaptation du ou des paramètres du modèle de robot pour la compensation des changements cinématiques a lieu en prenant en compte la différence détectée, lorsque la différence détectée dépasse une valeur prédéterminée et l'adaptation a lieu en fonction de la qualité déterminée.

3. Procédé selon la revendication 2 **caractérisé en ce que** des observations extrêmes aberrantes des positions spatiales réelles détectées sont éliminées pour éviter une adaptation des paramètres réalisée à l'aide de ces observations extrêmes aberrantes.

FIG 1

EP 0 963 816 B1

## FIG 2

## FIG 3

abs (Abweichung)(mm)